(19) Europäisches Patentamt / European Patent Office / Office européen des brevets

(11) **EP 3 979 395 A1**

(12) **EUROPEAN PATENT APPLICATION**
published in accordance with Art. 153(4) EPC

(43) Date of publication:
06.04.2022 Bulletin 2022/14

(21) Application number: 20815512.7

(22) Date of filing: 21.05.2020

(51) International Patent Classification (IPC):
$H01M\ 10/613^{(2014.01)}$   $H01M\ 10/617^{(2014.01)}$
$H01M\ 10/625^{(2014.01)}$   $H01M\ 10/651^{(2014.01)}$
$H01M\ 10/6554^{(2014.01)}$   $H01M\ 10/6556^{(2014.01)}$
$H01M\ 10/6568^{(2014.01)}$

(52) Cooperative Patent Classification (CPC):
H01M 10/613; H01M 10/617; H01M 10/625;
H01M 10/651; H01M 10/6554; H01M 10/6556;
H01M 10/6568; Y02E 60/10

(86) International application number:
PCT/JP2020/020034

(87) International publication number:
WO 2020/241431 (03.12.2020 Gazette 2020/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.05.2019 JP 2019098004

(71) Applicant: Valeo Japan Co., Ltd.
Kumagaya-Shi SAITAMA 360-0193 (JP)

(72) Inventors:
• TAKAHASHI, Osamu
  Kumagaya-shi Saitama 360-0193 (JP)
• KAKIUCHI, Shuji
  Kumagaya-shi Saitama 360-0193 (JP)
• TAKANO, Akihiko
  Kumagaya-shi Saitama 360-0193 (JP)

(74) Representative: Valeo Systèmes Thermiques
Service Propriété Intellectuelle
ZA l'Agiot, 8 rue Louis Lormand
CS 80517
La Verrière
78322 Le Mesnil-Saint-Denis Cedex (FR)

(54) **BATTERY COOLING SYSTEM**

(57) A battery cooling system includes a plurality of heat exchange sections (10) each having a heating medium line (11) therein. The plurality of heat exchange sections are classified into a plurality of heat exchange section groups (G1, G2, G3). A plurality of heat exchange sections (10) belong to each heat exchange section group, and the plurality of heat exchange sections belonging to one heat exchange section group are connected in parallel in such a manner that flow velocities of the heating medium passing through each of the plurality of heat exchange sections are substantially identical. The plurality of heat exchange section groups are connected in series, and the number of the heat exchange sections belonging to the heat exchange section group located relatively upstream is larger than the number of the heat exchange sections belonging to the heat exchange section group located relatively downstream. The flow velocity of the heating medium passing through each of the heat exchange sections belonging to the heat exchange section group located relatively downstream is higher than the flow velocity of the heating medium passing through each of the heat exchange sections belonging to the heat exchange section group located relatively upstream.

# Figure 2

**Description**

BACKGROUND OF THE INVENTION

1. Field of the Invention

The present invention relates to a cooling system for cooling a battery of an electric vehicle or the like with a coolant.

2. Description of the Related Art

A battery generates heat at a time of charging. Particularly when a battery for a vehicle such as an electric vehicle is rapidly charged, heat generation of the battery is high. Continuing charging in a state in which the battery is at a high temperature causes acceleration of battery degradation, lowering of a charging capacity, and reduction of a drivable distance of the electric vehicle. To solve this problem, a cooling system for cooling the battery using a heating medium (such as a refrigerant or a coolant) is used.

(Refer to, for example, Patent Literature 1.)

It is desired in the electric vehicle that long-distance driving can be achieved by charging once and rapid charging can be completed in a short time. To meet such a demand, a battery formed from many battery modules is mounted in a vehicle . The cooling system is required to narrow a temperature difference among the many battery modules to narrow a performance difference (including a difference in degree of degradation due to heat generation) among the battery modules. The cooling system is also required to reduce a pressure loss within the cooling system, particularly heat exchange sections to avoid upsizing and increasing power consumption of a water pump for circulating a heating medium used in the cooling system in a case in which the heating medium is the coolant.
Patent Literature 1: JP-A-2012-190675

SUMMARY OF THE INVENTION

An object of the present invention is to provide a battery cooling system capable of suppressing unevenness in cooling capacity among a plurality of heat exchange sections while reducing a total pressure loss generated in the plurality of heat exchange sections.
According to an embodiment, there is provided a battery cooling system including a plurality of heat exchange sections, wherein each of the heat exchange sections is configured in such a manner that heat exchange is generated between a heating medium flowing in a heating medium line formed within the heat exchange section and a battery module that thermally contacts a surface of the heat exchange section, each of heat exchange sections has a heating medium inlet portion and a heating medium outlet portion, and the plurality of heat exchange sections are configured in such a manner that a relationship between a pressure difference between the heating medium inlet portion and the heating medium outlet portion and a flow velocity of the heating medium flowing in the heating medium line is substantially identical among the plurality of heat exchange sections, wherein the plurality of heat exchange sections are classified into a plurality of heat exchange section groups, a plurality of heat exchange sections belong to each heat exchange section group, and the plurality of heat exchange sections belonging to one heat exchange section group are connected in parallel in such a manner that flow velocities of the heating medium passing through each of the plurality of heat exchange sections are substantially identical, and wherein the plurality of heat exchange section groups are connected in series, the number of heat exchange sections belonging to the heat exchange section group located relatively upstream is larger than the number of heat exchange sections belonging to the heat exchange section group located relatively downstream, and the flow velocity of the heating medium passing through each of the heat exchange sections belonging to the heat exchange section group located relatively downstream is thereby higher than the flow velocity of the heating medium passing through each of the heat exchange sections belonging to the heat exchange section group located relatively upstream.
According to the present invention, it is possible to suppress unevenness in cooling capacity among a plurality of heat exchange sections while reducing a total pressure loss generated in the plurality of heat exchange sections.

BRIEF DESCRIPTION OF THE DRAWINGS

Fig. 1 is a schematic exploded perspective view and a cross-sectional view depicting a configuration of a battery cooling system according to an embodiment of the present invention together with battery modules.
Fig. 2 is a fluid circuit diagram depicting a connection relationship among heating medium channels of a battery cooling system according to a first embodiment.
Fig. 3 is a fluid circuit diagram illustrating a connection relationship among heating medium channels of a battery cooling system according to a second embodiment.
Fig. 4 is a fluid circuit diagram illustrating a connection relationship among heating medium channels of a battery cooling system according to a third embodiment.

DESCRIPTION OF THE PREFERRED EMBODIMENTS

Preferred and non-limiting embodiments of a vehicle battery cooling system will be described hereinafter with reference to the drawings.

A battery cooling system is configured as a heat exchanger that forms part of a circulating line (not depicted) of a coolant serving as a heating medium. The circulating line has a pump that delivers the coolant to circulate the coolant in the circulating line and a cooling section that cools the coolant heated by generating heat exchange between the coolant and a battery in the battery cooling system (both the pump and the cooling section are not depicted.) The cooling section can be provided, for example, in rear of a front grille of a vehicle (motor vehicle.)

In the present specification, a term "coolant" means a liquid that cools an object to be cooled by taking heat from the object to be cooled without involving substantial phase change. Specific examples of the coolant include water containing an antifreezing component (component that lowers a freezing point) as used in engine cooling water of the motor vehicle.

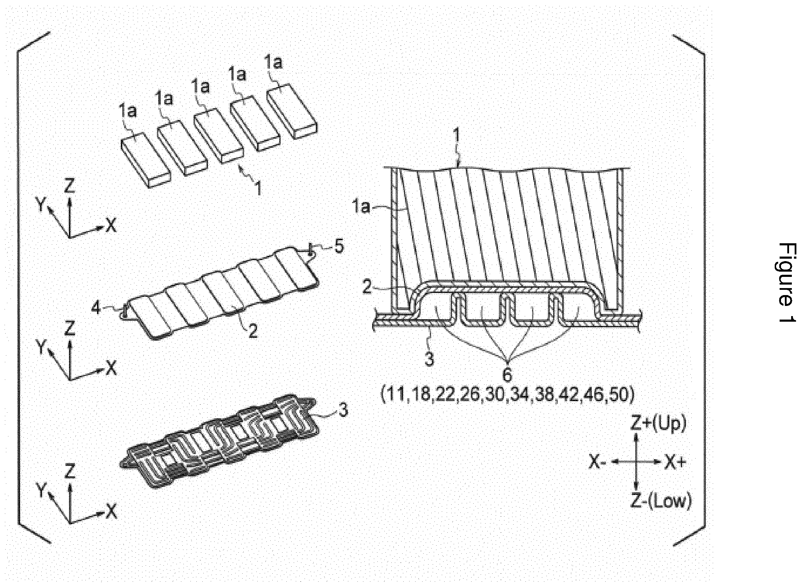

As depicted in Fig. 1, the cooling system is formed by bonding two panels 2 and 3. The panels 2 and 3 can be formed with a metallic material having high heat conductivity, for example, an aluminum alloy. Such panels 2 and 3 (metal plates) are worked into a preset shape by plastic working such as pressing.

A plurality of (five in an example depicted in Fig. 1) projecting portions (convex upward regions) are formed on the panel 2 (also referred to as "upper panel 2" . ) In other words, convex upward recesses are formed on a lower surface of the panel 2. One battery module 1a is placed on each projecting portion of the panel 2. Each battery module 1a is thermally coupled to the panel 2. By electrically connecting a plurality of battery modules 1a in series and/or in parallel, a battery 1 having a desired output voltage and a capacity is configured.

The right cross-sectional view of Fig. 1 illustrates a cross section made by cutting off a central portion, in a Y direction, of one heat exchange section 10 to be described later by a cutting plane parallel to an XZ plane. Convex upward pleated protrusions are formed on the panel 3 (also referred to as "lower panel 3") at positions corresponding to the projecting portions of the panel 2. By bonding the panels 2 and 3 by brazing, a plurality of (four, for example) heating medium channels 6 extending in a Y direction in parallel to one another are formed between the panels 2 and 3. Parts where the panels 2 and 3 contact each other are sealed by a brazing filler metal that is not depicted.

Providing the recesses and projections on the panels 2 and 3 brazed with each other makes it possible to form not only the heating medium channels 6 described above but also header sections (16, 20, 24, 28, 40, and 44), connection lines (18, 22, 26, 30, 42, and 46), and communication lines (34, 38, and 50) to be described later. These recesses and projections are schematically illustrated in the perspective view of the panel 3 depicted in Fig. 1.

An inlet port 4 and an outlet port 5 are provided in the battery cooling system. The inlet port 4 and the outlet port 5 can be each formed into a shape suited for connection to, for example, a quick connector. The inlet port 4 and the outlet port 5 are connected to the coolant circulating line described above. The coolant flowing into the battery cooling system from the circulating line via the inlet port 4 flows in the heating medium channels 6 formed between the panels 2 and 3 and is discharged to the circulating line via the outlet port 5. The coolant takes heat from the battery 1 and cools the battery 1 when flowing in the heating medium channels 6.

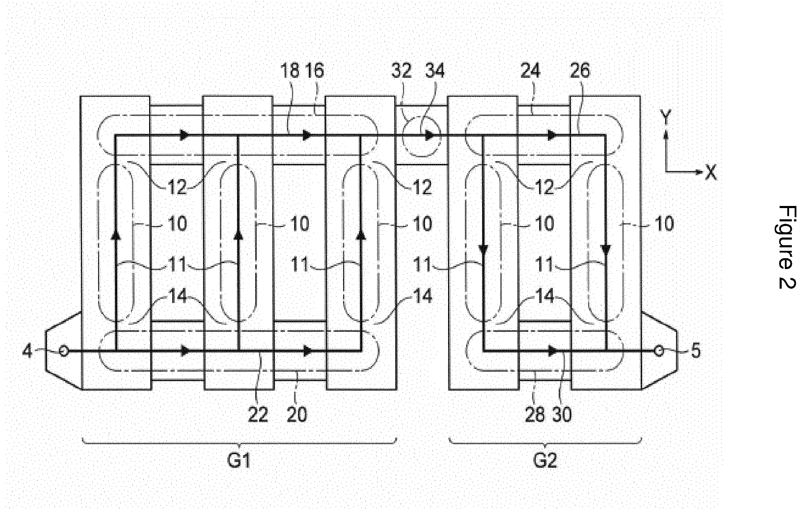

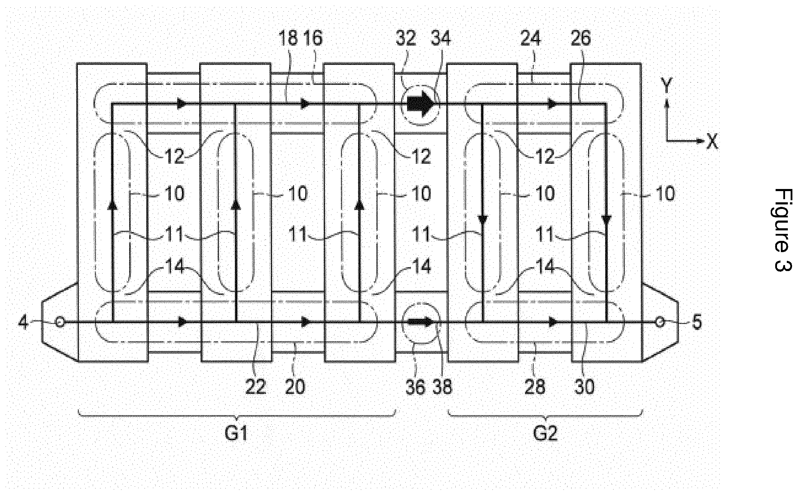

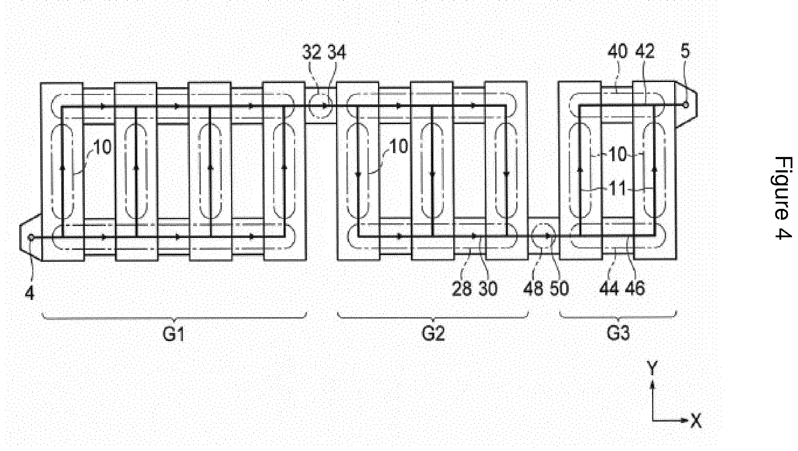

A first embodiment of the battery cooling system will next be described with reference to Fig. 2. In Fig. 2, thick-line arrows indicate a flow of a heating medium within the battery cooling system (the same thing is true for Figs. 3 and 4.)

The battery cooling system is configured with a plurality of heat exchange sections 10. Each heat exchange section 10 is configured to generate heat exchange between the coolant that serves as the heating medium and that flows in a heating medium line 11 formed within the heat exchange section 10 and one battery module 1a in thermal contact with a surface of the heat exchange section 10. One heat exchange section 10 is provided at a position corresponding to each projecting portion (convex upward region) of the upper panel 2 depicted in Fig. 1.

The plurality of heat exchange sections 10 are arranged side by side along an X direction. The X direction is preferably a horizontal direction.

Each heat exchange section 10 has a first end portion 12 and a second end portion 14 located opposite to each other with respect to a Y direction orthogonal to the X direction. The Y direction is preferably the horizontal direction similarly to the X direction. In embodiments depicted in Figs. 2 to 4, an end portion on an upper side of the heat exchange section 10 in Figs. 2 to 4 is referred to as "first end portion 12" and an end portion on a lower side therein is referred to as "second end portion 14."

One of the first end portion 12 and the second end portion 14 is a heating medium inlet portion that is an inlet of the heating medium into the heat exchange section 10, and the other end portion is a heating medium outlet portion that is an outlet of the heating medium from the heat exchange section 10.

The heating medium line 11 within each heat exchange section 10 can be configured by a plurality of heating medium channels 6 (refer to the right cross-sectional view of Fig. 1.) The heat exchange section 10 is configured in such a manner that a relationship between a pressure difference between the first end portion 12 and the second end portion 14 (that is, a pressure difference between the heating medium inlet portion and the heating medium outlet portion) and a flow velocity of the heating medium flowing within the heating medium line 11 is substantially identical among the plurality of heat exchange sections 10. This relationship can be realized if, for example, each heat exchange section 10 has the same number of (four, for example) heating medium channels 6 (refer to the right cross-sectional view of Fig. 1) and all the heating medium channels 6 have a substantially same equivalent diameter (however, conditions are not limited to this condition.)

The plurality of heat exchange sections 10 are classified into a plurality of heat exchange section groups. In the embodiment of Fig. 2, the plurality of heat exchange sections 10 are classified into two heat exchange section groups, that is, a first heat exchange section group G1 and a second heat exchange section group G2.

A plurality of heat exchange sections 10 belong to each of the first and second heat exchange section groups G1 and G2. The plurality of heat exchange sections 10 belonging to one heat exchange section group (G1 or G2) are connected in parallel in such a manner that the flow velocity of the heating medium passing through each of the plurality of heat exchange sections 10 is substantially identical.

The first heat exchange section group G1 has a first header section 16 to which the first end portion 12 of each of the plurality of heat exchange sections 10 (heating medium outlet portion in the first heat exchange section group G1) is connected, and a second header section 20 to which the second end portion 14 of each of the plurality of heat exchange sections 10 (heating medium inlet portion in the first heat exchange section group G1) is connected.

The first header section 16 and the second header section 20 continuously extend in the X direction. Within the first header section 16, the first connection line 18 connected to the heating medium line 11 of each heat exchange section 10 via the first end portion 12 is formed. Within the second header section 20, the second connection line 22 connected to the heating medium line 11 of each heat exchange section 10 via the second end portion 14 is formed.

The second heat exchange section group G2 has a third header section 24 to which the first end portion 12 of each of the plurality of heat exchange sections 10 (heating medium inlet portion in the second heat exchange section group G2) is connected, and a fourth header section 28 to which the second end portion 14 of each of the plurality of heat exchange sections 10 (heating medium outlet portion in the second heat exchange section group G2) is connected.

The third header section 24 and the fourth header section 28 continuously extend in the X direction. Within the third header section 24, the third connection line 26 connected to the heating medium line 11 of each heat exchange section 10 via the first end portion 12 is formed. Within the fourth header section 28, the fourth connection line 30 connected to the heating medium line 11 of each heat exchange section 10 via the second end portion 14 is formed.

The inlet port 4 described above is provided in the vicinity of an end portion of the second connection line 22 opposite to an end portion thereof closer to the second heat exchange section group G2. The inlet port 4 communicates with the second connection line 22 via the heating medium channels that are not depicted in detail. The outlet port 5 is provided in the vicinity of an end portion of the fourth connection line 30 opposite to an end portion thereof closer to the first heat exchange section group G1. The outlet port 5 communicates with the fourth connection line 30 via the heating medium channels that are not depicted in detail.

Therefore, in each heat exchange section 10 belonging to the first heat exchange section group G1, the heating medium flows from the second end portion 14 to the first end portion 12, and in each heat exchange section 10 belonging to the second heat exchange section group G2, the heating medium flows from the first end portion 12 to the second end portion 14.

That is, in all of the heat exchange sections (10) belonging to one heat exchange section group (G1, for example), the heating medium flows from one of the header sections (20) to the other header section (16). It can be defined that one heat exchange section group (G1, for example) is a "group of a plurality of adjacent heat exchange sections (10) which are provided in parallel between a pair of common header sections (20, 16) and in which the heating medium flows in the same direction." This respect is common to all heat exchange section groups (G1 to G3) according to all embodiments.

A downstream end of the first header section 16 (end portion thereof closer to the heat exchange section group G2) is coupled to an upstream end of the third header section 24 (end portion thereof closer to the heat exchange section group G1) by a first coupling portion 32. The heating medium flows from the first heat exchange section group G1 to the second heat exchange section group G2 via a first communication line 34 formed within the first coupling portion 32. That is, the first heat exchange section group G1 configured with the plurality of (three in the example of Fig. 2) heat exchange sections 10 and the second heat exchange section group G2 configured with the plurality of (two in the example of Fig. 2) heat exchange sections 10 are connected in series.

It is noted herein that the (three) heat exchange sections 10 belonging to the first heat exchange section group G1 located relatively upstream are more than the (two) heat exchange sections 10 belonging to the second heat exchange section group G2 located relatively downstream. As described above, the plurality of heat exchange sections 10 belonging to one heat exchange section group (G1 or G2) are connected in parallel in such a manner that the flow velocity of the heating medium passing through each of the plurality of heat exchange sections 10 is substantially identical. Owing to this, the flow velocity of the heating medium passing through each of the heat exchange sections 10 belonging to the second heat exchange section group G2 is higher than that of the heating medium passing through each of the heat exchange sections 10 belonging to the first heat exchange section group G1.

The heating medium heated by taking heat from the battery module 1a when passing through each heat exchange section 10 in the first heat exchange section group G1 flows into the second heat exchange section group G2. As described above, the flow velocity of the heating medium passing through each heat exchange section 10 in the second heat exchange section group G2 is higher than that of the heating medium passing through each heat exchange section 10 in the first heat exchange section group G1; thus, it is possible to equalize a cooling performance of the first heat exchange section group G1 to that of the second heat exchange section group G2.

The fact that the cooling performance of the first heat exchange section group G1 and that of the second heat exchange section group G2 can be equalized will be described.

In the first heat exchange section group G1, a temperature difference between the heating medium and each battery module 1a is relatively large and the flow velocity of the heating medium passing through and flowing in each heat exchange section 10 is relatively low, compared with the second heat exchange section group G2. Owing to this, the heating medium passing through the first heat exchange section group G1 is lower in mixing property and a temperature difference between a central portion and a portion in the vicinity of an inner surface of the heating medium line 11 grows in a view of a cross section of the heating medium line 11. That is, a temperature of the heating medium passing through and flowing in the vicinity of the inner surface of the heating medium line 11 rises, so that an amount of heat exchange between the first heat exchange section group G1 and the heating medium is restrained to a certain degree.

In the second heat exchange section group G2, a temperature difference between the heating medium and each battery module 1a is relatively small and the flow velocity of the heating medium passing through and flowing in each heat exchange section 10 is relatively high, compared with the first heat exchange section group G1. Owing to this, the heating medium passing through the first heat exchange section group G1 is higher in mixing property and a temperature difference between a central portion and a portion in the vicinity of an inner surface of the heating medium line 11 does not grow in a view of the cross section of the heating medium line 11. That is, a temperature of the heating medium passing through and flowing in the vicinity of the inner surface of the heating medium line 11 hardly rises. However, the temperature of the heating medium is higher than that at the inlet port 4 at timing at which the heating medium flows into the second heat exchange section group G2 from the first coupling portion 32. Owing to this, an amount of heat exchange between the second heat exchange section group G2 and the heating medium is restrained to a certain degree.

As described above, by configuring the first heat exchange section group G1 through and in which the relatively low-temperature heating medium passes and flows in such a manner that the flow velocity of the heating medium passing through each heat exchange section 10 is low and configuring the second heat exchange section group G2 through and in which the relatively high-temperature heating medium passes and flows in such a manner that the flow velocity of the heating medium passing through each heat exchange section 10 is high, it is possible to achieve equalization between the cooling capacity of the first heat exchange section group G1 and the cooling capacity of the second heat exchange section group G2 with respect to each battery module 1a.

Moreover, according to the embodiment, configuring one heat exchange section group (G1 or G2) by the plurality of heat exchange sections 10 connected in parallel makes it possible to reduce a pressure loss of the heating medium generated when the heating medium passes through one heat exchange section group. Further, by connecting such heat exchange section groups in series and setting the number of heat exchange sections 10 belonging to the heat exchange section group located downstream smaller than the number of heat exchange sections 10 belonging to the heat exchange section group located upstream, it is possible to equalize the cooling performances of the heat exchange sections 10 contained in all the heat exchange section groups (G1 and G2).

A second embodiment of the battery cooling system will next be described with reference to Fig. 3. In the second embodiment, a downstream end of the second header section 20 (end portion thereof closer to the heat exchange section group G2) is coupled to an upstream end of the fourth header section 28 (end portion thereof closer to the heat exchange section group G1) by a second coupling portion 36, and part of the heating medium thereby also flows from the first heat exchange section group G1 to the second heat exchange section group G2 via a second communication line 38 formed within the second coupling portion 36. A configuration of the second embodiment is identical to that of the first embodiment except for the above respects and repetitive description will be omitted. It may be rephrased that the first embodiment differs from the second embodiment in that the battery cooling system in the first embodiment does not have a coupling portion (second coupling portion 36) directly coupling the downstream end of the second header section 20 to the upstream end of the fourth header section 28.

The first and second coupling portions 32 and 36 are formed in such a manner that a flow rate of the heating medium flowing in the first communication line 34 is higher than a flow rate of the heating medium flowing in the second communication line 38. A flow rate relationship described above can be obtained by, for example, setting a cross-sectional area of the first communication line 34 larger than a cross-sectional area of the second communication line 38.

More specifically, the first communication line 34 and the second communication line 38 can be configured, for example, so that the following inequality 1 is established.

The following inequality 1 is established if it is assumed that the number of heat exchange sections 10 belonging to the first heat exchange section group G1 is "m", the number of heat exchange sections 10 belonging to the second heat exchange section group G2 is "n", and a ratio of the flow rate of the heating medium passing through the second communication line 38 to a sum of flow rates of the heating medium passing through the first communication line 34 and the second communication line 38 is "k".

$$k < 1-(n/m) \cdots (\text{Inequality 1})$$

Alternatively, the first communication line 34 and the second communication line 38 can be configured, for example, so that the following inequality 2 is established.

The following inequality 2 is established if it is assumed that the number of heat exchange sections 10 belonging to the first heat exchange section group G1 is "m", the number of heat exchange sections 10 belonging to the second heat exchange section group G2 is "n", and a ratio of the line cross-sectional area of the second communication line 38 to a sum of line cross-sectional areas of the first communication line 34 and the second communication line 38 is "k".

$$k < 1-(n/m) \cdots (\text{Inequality 2})$$

Satisfying at least one of the inequalities 1 and 2 makes it possible to optimize a ratio of the flow rate of the heating medium passing through the first communication line 34 to the flow rate of the heating medium passing through the second communication line 38 and to thereby make the cooling performances of the heat exchange section groups more uniform.

In a case of $k \geq 1 - (n/m)$, the flow rate of the heating medium passing through the heat exchange sections 10 belonging to the second heat exchange section group G2 is lower than the flow rate of the heating medium passing through the heat exchange sections 10 belonging to the first heat exchange section group G1. As a result, a temperature of each battery module 1a cooled by the heat exchange sections 10 belonging to the second heat exchange section group G2 is higher than a temperature of each battery module 1a cooled by the heat exchange sections 10 belonging to the first heat exchange section group G1.

In the second embodiment, the first heat exchange section group G1 and the second heat exchange section group G2 are coupled to each other by the two coupling portions (first coupling portion 32 and second coupling portion 36); thus, it is possible to enhance a strength and a rigidity of the overall battery cooling system in the second embodiment, compared with a case in which the first heat exchange section group G1 and the second heat exchange section group G2 are coupled to each other only by one coupling portion (first coupling portion 32) as in the first embodiment. In addition, it is thereby possible to lessen the burden of workers during transport and assembly of the battery cooling system.

A third embodiment of the battery cooling system will next be described with reference to Fig. 4. In the third embodiment, a third heat exchange section group G3 is further provided downstream of the second heat exchange section group G2. The first heat exchange section group G1, the second heat exchange section group G2, and the third heat exchange section group G3 are connected in series. Four heat exchange sections 10 belong to the first heat exchange section group G1, three heat exchange sections 10 belong to the second heat exchange section group G2, and two heat exchange sections 10 belong to the third heat exchange section group G3. That is, the number of heat exchange sections 10 belonging to the upstream heat exchange section group is larger than that belonging to the downstream heat exchange section group, similarly to the first and second embodiments.

The third embodiment is identical to the first embodiment except that the number of heat exchange sections 10 belonging to the first heat exchange section group G1 is larger by one than the number of heat exchange sections 10 belonging to the second heat exchange section group G2. A relationship between the second heat exchange section group G2 and the third heat exchange section group G3 is identical to a relationship between the first heat exchange section group G1 and the second heat exchange section group G2.

As depicted in Fig. 4, the third heat exchange section group G3 has a fifth header section 40 to which the first end portion 12 of each of the plurality of heat exchange sections 10 (heating medium outlet portion in the third heat exchange section group G3) is connected, and a sixth header section 44 to which the second end portion 14 of each of the plurality of heat exchange sections 10 (heating medium inlet portion in the third heat exchange section group G3) is connected.

The fifth header section 40 and the sixth header section 44 continuously extend in the X direction. Within the fifth header section 40, the fifth connection line 42 connected to the heating medium line 11 of each heat exchange section 10 via the first end portion 12 is formed. Within the sixth header section 44, the sixth connection line 46 connected to the heating medium line 11 of each heat exchange section 10 via the second end portion 14 is formed.

A downstream end of the fourth header section 28 (end portion thereof closer to the heat exchange section group G3) is coupled to an upstream end of the sixth header section 44 (end portion thereof closer to the heat exchange section group G2) by a third coupling portion 48. The heating medium flows from the second heat exchange section group G2 to the third heat exchange section group G3 via the third communication line 50 formed within the third coupling portion 48.

The outlet port 5 is provided in the vicinity of an end portion of the fifth connection line 42 opposite to an end portion thereof closer to the second heat exchange section group G2. The outlet port 5 communicates with the fifth connection line 42. The heating medium flows from the second end portion 14 to the first end portion 12 of each of the heat exchange sections 10 in the third heat exchange section group G3.

It is obvious that the third embodiment exhibits similar advantage to those of the first embodiment.

Description of Reference Numerals and Signs

    1: Battery
    1a: Battery module
    10: Heat exchange section
    11: Heating medium line
    12: First end portion (heating medium inlet portion or heating medium outlet portion)
    14: Second end portion (heating medium inlet portion or heating medium outlet portion)
    16, 20, 24, 28, 40, 44: Header section
    18, 22, 26, 30, 42, 46: Connection line
    32, 36, 48: Coupling portion
    34, 38, 50: Communication line
    G1, G2, G3: Heat exchange section group

Claims

1. A battery cooling system comprising

    a plurality of heat exchange sections (10), wherein each of the plurality of heat exchange sections is configured in such a manner that heat exchange is generated between a heating medium flowing in a heating medium line (11) formed within the heat exchange section and a battery module (1a) that thermally contacts a surface of the heat exchange section, each of the heat exchange sections has a heating medium inlet portion and a heating medium outlet portion (12, 14), and the plurality of heat exchange sections are configured in such a manner that a relationship between a pressure difference between the heating medium inlet portion and the heating medium outlet portion and a flow velocity of the heating medium flowing in the heating medium line is substantially identical among the plurality of heat exchange sections, wherein the plurality of heat exchange sections are classified into a plurality of heat exchange section groups (G1, G2, G3), a plurality of heat exchange sections (10) belong to each heat exchange section group, and the plurality of heat exchange sections belonging to one heat exchange section group are connected in parallel in such a manner that flow velocities of the heating medium passing through each of the plurality of heat exchange sections are substantially identical, and

wherein the plurality of heat exchange section groups (G1, G2, G3) are connected in series, the number of heat exchange sections (10) belonging to the heat exchange section group located relatively upstream is larger than the number of heat exchange sections (10) belonging to the heat exchange section group located relatively downstream, and the flow velocity of the heating medium passing through each of the heat exchange sections belonging to the heat exchange section group located relatively downstream is thereby higher than the flow velocity of the heating medium passing through each of the heat exchange sections belonging to the heat exchange section group located relatively upstream.

2. The battery cooling system according to claim 1,

    wherein the plurality of heat exchange section groups include at least a first heat exchange section group (G1) and a second heat exchange section group (G2),
    wherein the plurality of heat exchange sections (10) belonging to the first and second heat exchange section groups (G1, G2) are arranged side by side along an X direction,
    wherein each of the heat exchange sections (10) has a first end portion (12) and a second end portion (14) opposite to each other with respect to a Y direction orthogonal to the X direction, one of the first end portion and the second end portion is the heating medium inlet portion and the other end portion is the heating medium outlet portion,
    wherein the first heat exchange section group (G1) has a first header section (16) to which the first end portion (12) of each of the plurality of heat exchange sections (10) belonging to the first heat exchange section group (G1) is connected and a second header section (20) to which the second end portion (14) of each of the plurality of heat exchange sections (10) belonging to the first heat exchange section group (G1) is connected, the first header section and the second header section continuously extend in the X direction, a first connection line (18) connected to the heating medium line (11) in the plurality of heat exchange sections (10) is formed within the first header section, and a second connection line (22) connected to the heating medium line in the plurality of heat exchange sections is formed within the second header section,

wherein the second heat exchange section group (G2) has a third header section (24) to which the first end portion (12) of each of the plurality of heat exchange sections (10) belonging to the second heat exchange section group (G2) is connected and a fourth header section (28) to which the second end portion (14) of each of the plurality of heat exchange sections (10) belonging to the second heat exchange section group (G2) is connected, the third header section and the fourth header section continuously extend in the X direction, a third connection line (26) connected to the heating medium line in the plurality of heat exchange sections is formed within the third header section, and a fourth connection line (30) connected to the heating medium line in the plurality of heat exchange sections is formed within the fourth header section,

wherein in each heat exchange section (10) belonging to the first heat exchange section group (G1), the heating medium flows from the second end portion (14) to the first end portion (12),

wherein in each heat exchange section (10) belonging to the second heat exchange section group (G2), the heating medium flows from the first end portion (12) to the second end portion (14), and

wherein a downstream end of the first header section (16) is coupled to an upstream end of the third header section (24) by a first coupling portion (32), and the heating medium is configured to flow from the first heat exchange section group (G1) to the second heat exchange section group (G2) via a first communication line (34) formed within the first coupling portion.

3. The battery cooling system according to claim 2, wherein a downstream end of the second header section (20) is coupled to an upstream end of the fourth header section (28) by a second coupling portion (36), the heating medium is configured to flow from the first heat exchange section group to the second heat exchange section group via a second communication line (38) formed within the second coupling portion, and the first and second coupling portions (32, 36) are formed in such a manner that a flow rate of the heating medium flowing in the first communication line (34) is higher than a flow rate of the heating medium flowing in the second communication line (38).

4. The battery cooling system according to claim 3, wherein a following relationship is established if it is assumed that the number of heat exchange sections (10) belonging to the first heat exchange section group (G1) is "m", the number of heat exchange sections (10) belonging to the second heat exchange section group (G2) is "n", and a ratio of the flow rate of the heating medium passing through the second communication line (38) to a sum of flow rates of the heating medium passing through the first communication line (34) and the second communication line (38) is "k":

$$k < 1 - (n/m).$$

5. The battery cooling system according to claim 3, the following relationship is established if it is assumed that the number of heat exchange sections (10) belonging to the first heat exchange section group (G1) is "m", the number of heat exchange sections (10) belonging to the second heat exchange section group (G2) is "n", and a ratio of a line cross-sectional area of the second communication line (38) to a sum of line cross-sectional areas of the first communication line (34) and the second communication line (38) is "k":

$$k < 1 - (n/m).$$

6. The battery cooling system according to claim 2, the battery cooling system does not have a coupling portion directly coupling a downstream end of the second header section (20) to an upstream end of the fourth header section (28).

7. The battery cooling system according to any one of claims 2 to 6, wherein at least the plurality of heat exchange sections (10), the first header section (16) and the second header section (20), and the third header section (24) and the fourth header section (28) are formed integrally from two metal plates (2, 3) brazed with each other.

# Figure 1

# Figure 2

Figure 3

# Figure 4

<div style="text-align:center">**INTERNATIONAL SEARCH REPORT**</div>

| | International application No. |
|---|---|
| | PCT/JP2020/020034 |

**A. CLASSIFICATION OF SUBJECT MATTER**
H01M 10/613(2014.01)i; H01M 10/617(2014.01)i; H01M 10/625(2014.01)i; H01M 10/651(2014.01)i; H01M 10/6554(2014.01)i; H01M 10/6556(2014.01)i; H01M 10/6568(2014.01)i
FI: H01M10/617; H01M10/613; H01M10/651; H01M10/625; H01M10/6556; H01M10/6568; H01M10/6554
According to International Patent Classification (IPC) or to both national classification and IPC

**B. FIELDS SEARCHED**

Minimum documentation searched (classification system followed by classification symbols)
H01M10/613; H01M10/617; H01M10/625; H01M10/651; H01M10/6554; H01M10/6556; H01M10/6568

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X Y A | JP 2013-89507 A (TOYOTA INDUSTRIES CORPORATION) 13.05.2013 (2013-05-13) paragraphs [0016]-[0025], [0039]-[0049], fig. 1-3 | 1, 2, 6 7 3-5 |
| Y | JP 2015-22830 A (CALSONIC KANSEI CORPORATION) 02.02.2015 (2015-02-02) paragraph [0026] | 7 |
| A | JP 2013-105880 A (TOYOTA MOTOR CORP.) 30.05.2013 (2013-05-30) entire text, all drawings | 1-7 |
| A | JP 2014-216298 A (HITACHI AUTOMOTIVE SYSTEMS, LTD.) 17.11.2014 (2014-11-17) entire text, all drawings | 1-7 |
| A | US 2014/0041835 A1 (MAGNA STEYR BATTERY SYSTEMS GMBH & CO., OG) 13.02.2014 (2014-02-13) entire text, all drawings | 1-7 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 August 2020 (04.08.2020) | 18 August 2020 (18.08.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

International application No.

PCT/JP2020/020034

| Patent Documents referred in the Report | Publication Date | Patent Family | Publication Date |
|---|---|---|---|
| JP 2013-89507 A | 13 May 2013 | (Family: none) | |
| JP 2015-22830 A | 02 Feb. 2015 | (Family: none) | |
| JP 2013-105880 A | 30 May 2013 | (Family: none) | |
| JP 2014-216298 A | 17 Nov. 2014 | (Family: none) | |
| US 2014/0041835 A1 | 13 Feb. 2014 | EP 2696434 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012190675 A